Europäisches Patentamt

(19) European Patent Office

Office européen des brevets

(11) Publication number: **0 053 508**
**B1**

(12) **EUROPEAN PATENT SPECIFICATION**

(45) Date of publication of patent specification: **01.04.87**

(51) Int. Cl.⁴: **B 01 D 45/14, A 47 L 9/10**

(21) Application number: **81305647.0**

(22) Date of filing: **30.11.81**

(54) Improved fluid/particle separator apparatus.

(30) Priority: **02.12.80 GB 8038607**

(43) Date of publication of application:
**09.06.82 Bulletin 82/23**

(45) Publication of the grant of the patent:
**01.04.87 Bulletin 87/14**

(84) Designated Contracting States:
**AT BE CH DE FR GB IT LI LU NL SE**

(56) References cited:
**EP-A-0 004 145**
**FR-A-1 053 943**

(73) Proprietor: **Mellor, Fred**
**57 Sandringham Road**
**Dalston London E8 2LR (GB)**
(73) Proprietor: **Mellor, Joyce Burgess**
**57 Sandringham Road**
**Dalston London E8 2LR (GB)**

(72) Inventor: **Mellor, Fred**
**57 Sandringham Road**
**Dalston London E8 2LR (GB)**
Inventor: **Mellor, Joyce Burgess**
**57 Sandringham Road**
**Dalston London E8 2LR (GB)**

(74) Representative: **Paget, Hugh Charles Edward**
**MEWBURN ELLIS & CO. 2/3 Cursitor Street**
**London EC4A 1BQ (GB)**

Courier Press, Leamington Spa, England.

## Description

The present invention relates to improved fluid/ particle separator apparatus.

Until recently, one of the simplest and cheapest fluid/particle separators in use has been the filter, but this has the disadvantage of becoming clogged with the particles separated and, after a certain period of use, requiring cleaning or replacement. Rotary separator apparatus described in EP—A—4145 was therefore developed to provide a relatively cheap and effective substitute for the filter, and indeed for other separating apparatus, and is capable of operating continuously over long periods.

The apparatus described in the above application consists essentially of a chamber having an inlet and an outlet for a fluid flow and an apertured rotor coaxial with, and substantially closing, the inlet. The rotor apertures are each bounded by a vane which projects at an acute angle to the rotor axis from that side of the rotor facing into the chamber, each vane extending along the trailing edge of the aperture with respect to the circumferential direction of motion of the rotor, when rotated by a drive in use.

When a flow of particle-containing fluid is fed to the chamber inlet and the rotor is rotated, in use, the fluid is centrifuged by the rotor vanes as it passes through the apertures and thus undergoes a sharp change in direction. The particles in the flow being heavier and having greater inertia, continue in substantially straight lines and rebound from the rotor surfaces; the inclination of the vanes and the relative velocities of the fluid flow and the rotor are arranged so that the particles remain on the inlet side of the rotor and cleansed fluid passes to the outlet.

A difficulty found in realising a practial embodiment of the above apparatus was in providing a seal around the periphery of the rotor to prevent particle-laden fluid from leaking through the clearance between the rotor and the chamber inlet. Mechanical seals, such as brush seals, could be provided but the friction between the rotor and the seal reduces the overall efficiency of the apparatus: such friction necessitates the use of a higher power motor to drive the rotor at the speeds necessary for efficient particle separation or, in practical embodiments in which the drive for the rotary separator is taken directly from the drive for a centrifugal impeller assembly creating the fluid flow, reduces the speed of rotation of the rotary separator and the impeller assembly, thus reducing the volume through-flow of fluid created by the assembly to unacceptably low levels.

It was found possible to overcome this difficulty with the rotary separator outlined above by ensuring that part of the cleansed fluid flow centrifuged by the separator was forced out through the clearance between the periphery of the rotor and the chamber inlet, preventing the leakage of particle-laden fluid in the opposite direction. In order to maintain the required pressure differences for this sealing-flow to be achieved over a range of operating conditions of the apparatus, bleed vents were provided in the peripheral wall of the chamber and a cylindrical baffle wall was located coaxially within the chamber, surrounding the outlet.

Although providing the required pressure regulation, the bleed vents have the disadvantage of either allowing part of the fluid which has already been cleansed by passage through the rotary separator to be lost from the overall air flow through the outlet or of allowing particle-laden air to bleed into the chamber to contaminate the cleansed air; this necessitated the provision of the cylindrical baffle to prevent direct flow from the bleed vents to the outlet. The overall effect of this arrangement was that attempts to improve the through-flow or air through the apparatus reduced its particle/separating efficiency and *vice versa*. In particular the presence of the cylindrical baffle wall around the outlet caused air to be drawn from the centre of the rotor, rather than from its periphery, causing the cleansed air to change direction sharply and resulting in considerable turbulence.

The object of the present invention is therefore to modify the apparatus of the type described above in order to increase its efficiency, in particular to improve flow from the rotor to the outlet.

Accordingly, the present invention provides a fluid/particle separator unit as set out in claim 1.

The apparatus according to the invention has the advantage over the previous apparatus described above of arranging a modified baffle means axially downstream of the particle-separating rotor for improving the flow of fluid from the rotor to the outlet.

It is found that there is no need for bleed vents in the chamber wall of the present apparatus and the separating efficiency can be improved over that achievable with the prior art apparatus. The passage itself may be generally cylindrical, frustoconical or of other form which can promote the fluid flow to the outlet.

The baffle means of the apparatus of the present invention may simply comprise a circular plate arranged to prevent fluid from being drawn from the centre of the rotor directly to the outlet. Preferably the rotor apertures are located in a radially outer portion of the rotor, for reasons which will be explained below. The baffle may be of larger diameter than the rotor depending on the configuration of the chamber but must be spaced from the chamber wall sufficiently to allow the free flow of the fluid over the edge of the baffle plate to the outlet.

In most embodiments, the cross-sectional area of the outlet should be approximately equal to the flow-cross sectional area available to the fluid passing through the rotor apertures in order to maintain the flow-cross section through the apparatus as a whole substantially constant. The outlet will in that case be considerably smaller in diameter than the rotor, and stator vanes are preferably provided between the baffle plate and the chamber wall including the outlet to form radial ducts for ducting centrifuged fluid from the periphery of the chamber to the outlet.

The baffle mentioned above may be carried by the rotor, or drive therefor, for rotation in use but is preferably static for constructional simplicity and to reduce the number of moving parts, and corresponding wear and expense, of the apparatus. Rotary impeller blades may also be provided between the baffle and the rotor for enhancing the radially outward flow created by the rotor itself, particularly in embodiments of the invention in which the rotor has no upstanding vanes projecting towards the baffle.

As mentioned in the introduction, the clearance between the rotor and the body bounding the passage which clearance may be radially and/or axially directed, may be sealed by any suitable mechanical seal but it is preferred to create an air seal by arranging the body, baffle means and rotor so as to ensure that sufficient pressure is set up around the periphery of the rotor, within the passage, in use, to force cleansed air through the clearance and prevent particle-laden air from bleeding in the opposite direction. For this purpose the body is preferably formed with an internal shoulder from which the rotor is axially spaced, the clearance being formed between the rotor and an axially-extending passage wall defining the inlet. An air-seal can, however, be formed through an axial clearance with a suitable arrangement of the body, baffle means and rotor.

The apertures in the separating rotor, as mentioned above, should provide a minimum flow cross-section at least equal to the cross section of the outlet, or of the smallest apertures in the apparatus in which the separating unit is used through which the fluid must flow, in order not to restrict the flow. In addition, the apertures and inclined surfaces of the rotor and the speed of rotation of the latter should preferably be such as to occlude direct passage through the rotor parallel to its axis in the time taken for the fluid to travel through the rotor. The apertures and inclined surfaces should also be so arranged that particles impinging on the inclined surfaces rebound into the space on the inlet side of the rotor and not into the passage downstream of the rotor nor to a surface facing into the passage downstream of the rotor. The actual configuration of the rotary separator, and particularly of its apertures and inclined surfaces, can vary widely and depends on the intended speed of rotation of the separator and on the fluid flow rate for a particular use, but, in general, the apertures are preferably located in the radially outer portion of the rotor where the tangential velocity of a point on the aperture is greater than near the centre, for a given rotational speed and the apertures can be made wider, in a generally circumferential direction, so as not to restrict the fluid-flow unduly by viscous drag as the fluid passes over the rotor surfaces bounding the apertures.

In order to provide the required overall flow-cross-sectional area the apertures may be radially-elongate, preferably generally rectangular but if tapered, not tapering to a point, but they should preferably be no more than about three times as long as their width so that the tangential velocities of their innermost and outermost points, in use, are not too diverse. The separating surfaces of the rotor may be inclined at from 10° to 75° to the plane of rotation of the rotor, depending on the relative speed of rotation of the rotor and the fluid flow rate, in use, as will be more fully explained below. Preferably the surfaces are inclined at from 30° to 45° to the said plane.

The apertures of the rotor may extend radially or be inclined to the radius through their ends closest to the centre by up to 45°, but preferably no more than about 10° in either the leading or the trailing sense with respect to the circumferential direction of motion of the rotor in use. The proportion of centrifuged air forced through the clearance between the rotor and the inlet is increased as the apertures are inclined further to the radius, in the trailing sense, as defined above. The apertures may extend to the circumference of the rotor and may be defined by a plurality of relatively thin vanes providing the said surfaces but, in preferred embodiments of the invention, the apertures are formed in a separator disc. For reasons of strength and to facilitate circumferential sealing the disc preferably has an unapertured, peripheral portion.

The inclined surfaces bounding the apertures may comprise surfaces of vanes extending along, or adjacent, a longitudinal edge of each aperture and projecting from that surface of the disc towards the baffle means. Surprisingly, they may alernatively comprise faces formed within the thickness of the disc.

The apertured disc rotor, without vanes, operates in a manner similar to a vaned, apertured rotor. The arrangement of the invention with such a rotor is particularly applicable to a separator unit for connection to a pump or impeller having an axial inlet aperture to which the outlet of the chamber can be connected so that the rotary separator prevents particles in the flow created by the pump or impeller from reaching either of the latter.

It is thought that the apertured disc rotor may be particularly suitable for use in a fluid flow created by a pump or impeller located upstream of the separator unit; in this case the centrifuged fluid collected from the periphery of the rotor need not be ducted to a central outlet. Such a separator unit would be adapted to fit a duct or chamber through which the fluid is forced, in use, and may require the provision of an independent drive for rotating it whereas a rotor located across an inlet to a pump or impeller may conveniently, although need not necessarily, be connected to be rotated by the drive of the pump or impeller.

In one form of the invention the fluid/particle separator assembly may have an impeller mounted on a drive shaft for rotation by a motor and housed in a casing having an axial opening to the impeller, the apertured separator rotor being coaxial with the impeller and connected for rotation by the drive shaft and being in a passage upstream of said opening to the impeller. The impeller in use induces an air flow through into the casing opening past the rotor. Particles in the air flow rebound from the rotor surfaces and remain outside the casing. The motor for rotating the drive shaft may be mounted on or within the casing.

In use of such apparatus, the particles separated from the fluid flow induced by the impeller may be collected in a container through which the particle-laden fluid is drawn to the impeller inlet, as in the case of apparatus adapted for use with a suction cleaner. Alternatively the rotary separator may simply be provided as a filter, for example to protect an air-cooled motor and/or an impeller from damage by dust particles in the induced air flow.

The invention also provides a suction cleaner comprising a container having an inlet opening for dust-laden air and a fluid particle separator assembly as described above mounted on the container with the inlet thereto communicating with an outlet opening of the container, in use dust being trapped in the container and cleansed air being expelled from the impeller.

In any of the apparatus described above, the rotary separator of the invention does not, unlike a filter, become clogged by the particles separated and require frequent replacement, nor does it cause the working flow created by the impeller to fall off rapidly with use.

Two embodiments of the invention will now be more particularly described, by way of example, with reference to the accompanying drawings, in which:

Figure 1 is an axial-sectional view of a suction cleaner incorporating a separator assembly according to the invention;

Figure 2 is a sectional view taken on line II—II of Figure 1;

Figure 3 is a sectional view, on an enlarged scale, taken on line III—III of Figure 2 showing part of the separator assembly of the suction cleaner;

Figure 4 is a schematic axial-sectional view similar to Figure 1 of a second embodiment of the invention;

Figure 5 is a view taken on the line V—V of Figure 4;

Figure 6 is a view taken on line VI—VI of Figure 5; and

Figure 7 is a schematic diagram of a particle impinging on a rotary separator forming part of the apparatus of Figures 1 to 3.

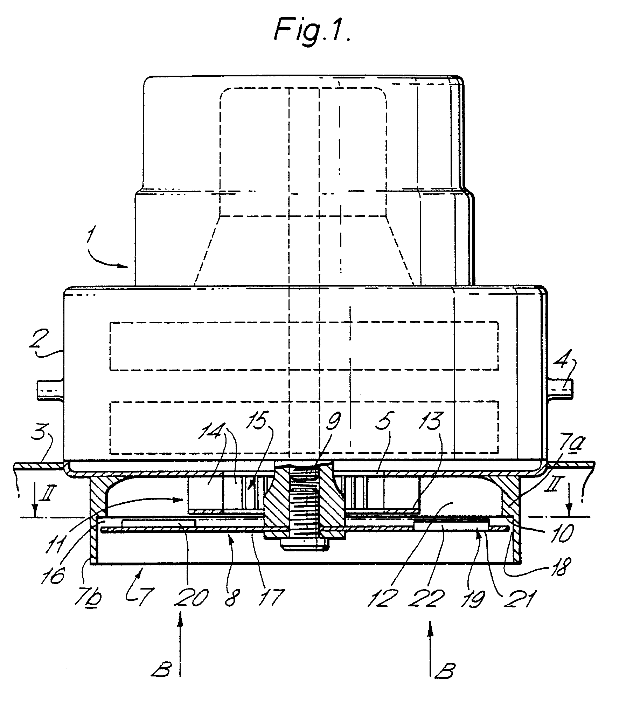

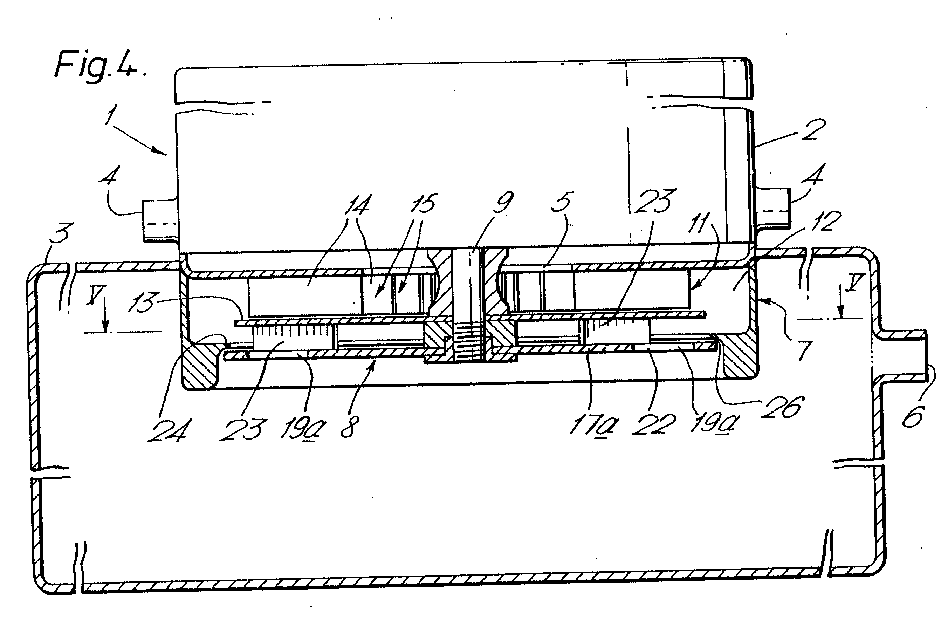

Referring to Figure 1 of the drawings, a suction cleaner according to the invention is shown generally indicated 1 including a motor/impeller assembly housed in a casing 2 mounted on the lid of a container 3. The cleaner is arranged such that, in use, the motor/impeller assembly exhausts air from the casing 2 through peripheral outlets 4, thus inducing an air flow into the casing 2 through an axial opening 5 from the container 3, and causing a flow, which normally comprises dust-laden air, into the container 3 through an inlet 6 (Fig. 4). The motor/impeller assembly 1 and its arrangement on the container 3 are of known type and will not, therefore, be described further not shown fully in the drawings.

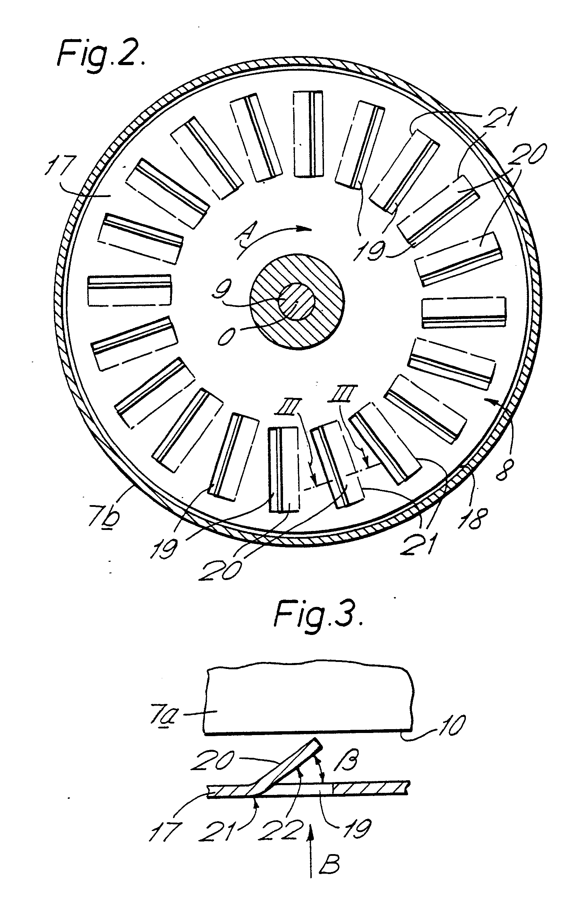

The suction cleaner of Figure 1 also includes a gas/particle separator unit of the invention connected to the opening 5 for separating dust from the air flow to the motor/impeller assembly. The separator unit comprises a generally cylindrical housing 7 coaxial with the opening 5, sealed at its upper end to the casing 2 and open at its lower end, and a rotary separator generally indicated 8 within and adjacent the lower end of the housing. The rotary separator 8 is mounted for rotation, in the sense shown by arrow A in Figure 2, with the drive shaft 9 of the motor/impeller assembly, the end of which projects coaxially through the outlet 5. The separator 8 in the embodiment, is in fact fixed to an extension drive shaft screwed on to the end of the shaft 9 but the shaft 9 may, alternatively, be formed to receive the separator 8 directly.

The housing 7 has a thickened upper wall portion 7a attached to the casing 2 and a thinner, axially-extending skirt 7b surrounding the separator, a radially-extending annular shoulder 10 being formed between the separator 8 and the casing 2. The annular space between the separator periphery and the shoulder 10 is indicated 16.

The separator further includes a stator assembly, generally indicated 11, coaxial with and between the separator 8 and the casing 2 and radially spaced from the thicker wall portion 7a of the housing 7 to define an annular peripheral space 12. The stator assembly 11 includes an annular baffle plate 13 adjacent the separator and a plurality of radially-extending vanes 14 attached at opposite edges to the casing 2, around the opening 5, and to the baffle plate 13 to support the latter. The vanes 14 thus define radially-extending ducts 15 between them.

Referring to Figures 2 and 3 of the drawings, the rotary separator 8 is shown in greater detail. The separator 8 comprises a disc 17 of substantially the same diameter (140 mm) as the internal wall of the housing skirt 7b, but separated therefrom by a small radial clearance 18, $\frac{1}{2}$mm in width. The disc 17 is formed with a plurality of similar, radially-elongate, equiangularly-spaced apertures 19 and vanes 20, the apertures 19 being formed by punching the vanes 20 from the disc such that each vane is attached to the disc along a longitudinal edge 21 comprising the trailing edge of the respective aperture with respect to the sense of rotation A. The vanes 20 are planar and inclined at an angle β to the plane of the disc 17; the longitudinal edges 21 of the apertures 19 in this embodiment are radial but in other embodiments may be inclined to the radius of the disc through their midpoints. The vanes 20 project from the disc 19 towards the casing 2, as shown in Figure 3 and schematically in Figure 1, the inner edges of the vanes 20 and apertures 19 lying on a circle of substantially the same radius as the outer periphery of the baffle plate 13.

The vanes 20 thus present inclined surfaces 22 facing circumferentially and away from the baffle plate 8.

The number, size and shape of the apertures 19 and of the vanes 20, their spacing from the centre 0 of the disc 17, their inclination to the radius, in a trailing or a leading sense, and the value of the angle β may be varied to vary the separation achieved by the rotary separator but, in the embodiment of Figures 1 to 3, these factors have the following values:

No. of apertures    20
Shape of apertures    Rectangular
Radial length of each aperture    16 mm
Width of each aperture    7 mm
Radius of longitudinal centre of each aperture    55 mm
β    35°

The operation of the suction cleaner described above is as follows: the cleaner is arranged so that activation of the motor/impeller assembly causes dust-laden air to be drawn into the container 3 through the inlet 6.

Within the container 3 the air flow induced by the impeller flows upwardly in the direction of the arrow B towards the lower, inlet end of the housing 7 and encounters the rotary separator 8 rotated by the motor drive shaft 9. The separator 8 is so formed that it prevents substantially all the dust particles in the air flow from passing through it, as will be explained below, while allowing the air to flow through the apertures 19. In passing through the apertures 19 the air flow is subjected to a centrifuging action by the vanes 20, resulting in a radially outward flow into the peripheral space 12 and the annular space 16.

It will be appreciated that this radially-outward flow of air causes a region of higher pressure to be built up within the space 16, the dimensions and configuration of the separator assembly being such that this high pressure region causes air to escape outwardly from the housing 7 through the radial clearance 18 between the disc 17 and the skirt 7b, thus preventing dust-laden air from leaking through this clearance in the opposite direction. The proportion of the air flow which is forced through the clearance can be regulated by adjusting the axial spacing of the rotor from the chamber shoulder 10 and the inclination β of the vanes.

The air centrifuged into the space 16 is drawn to the opening 5 to the motor/impeller assembly, the plate 13 and stator vanes 14 facilitating the flow and ensuring that the air is drawn from the periphery of the disc rather than from the centre to reduce turbulence.

Cleansed air is finally exhausted by the impeller assembly through the outlets 4.

Separating action

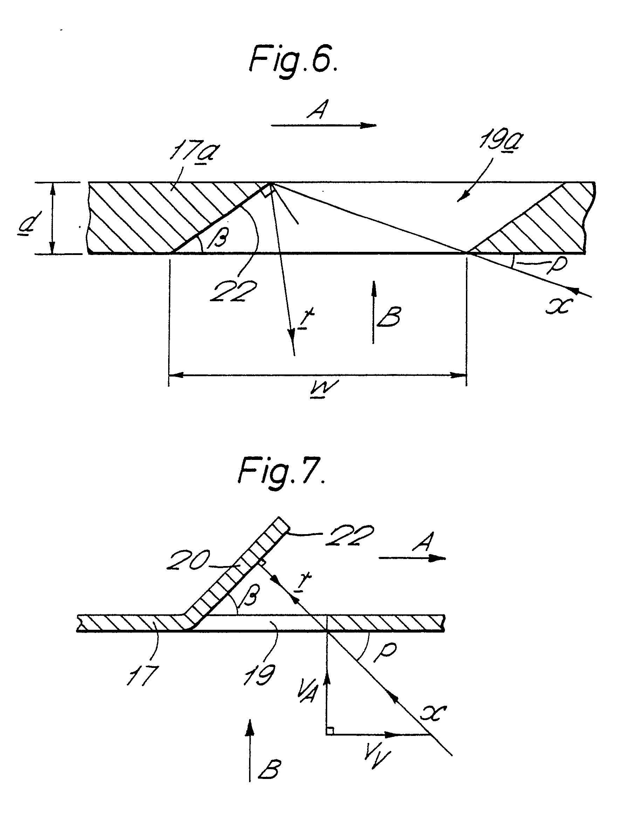

It is believed that the main separating action of the separator assembly may be represented by the following approximation, made with reference to Figure 7: Air is drawn towards the separator assembly in the direction of arrow B at a velocity $V_A$ and encounters the rotating, vaned disc 17. The air can be considered as approaching a radially midpoint on a vane 20, which has a tangential speed $V_v$, at a relative speed x, given by the equation:

$$x = \sqrt{V_A^2 + V_v^2},$$

at an angle ρ to the plane of the disc given by: tan p =

$$\frac{V_A.}{V_v}$$

The apertures 19 and the vanes 20 are so formed that at the relative speed x and angle ρ of approach, the air cannot pass through the apertures without changing direction. The air is therefore diverted from a straight line path to pass through the apertures 19 while the heavier dust particles entrained in the air flow, because of their greater inertia, continue substantially in straight lines to the separator 8 and rebound either from the flat lower face of the disc 17 or from the surfaces 22 of the vanes 20. The inclination of the surfaces 22 is such that the particles rebound back into the container 3, in the direction or arrow r.

Figure 7 shows the maximum inclination β of a vane 20 at which all the particles hitting it will rebound into the container 3, the relative speed and direction of approach of a particle to the vane being represented by x. At this angle, each particle rebounds from a vane along the path at which it is incident on the vane, i.e. in actuality, approximately perpendicular to the plane of the disc 17: if β is greater than the maximum angle shown, the particles will rebound from the vanes 20 towards the outlet side of the plate 17 facing the baffle plate 13, i.e. will remain in the air flow passing through the separator 8.

From Figure 7 it is seen that:

$$\beta_{max} = 90° - \rho$$

$$\beta_{max} = 90° - \tan^{-1}\frac{V_A}{V_v}$$

As shown above, the maximum value of β for a particular disc depends both on the velocity $V_A$ of the air flow in which the disc is to be used and on the speed of rotation of the disc itself. The velocity of points at the extreme ends of the vanes will be different from the velocity $V_v$, considered above, of a central point but, with practical values of β, provided the length of the aperture is no more than about three times its width, particularly with apertures in the radially outer portion of the disc 17, the difference does not significantly affect the separation.

The velocity $V_A$ of the air flow depends on the power of the motor impeller assembly as well as on the configuration of the separator assembly and since the motor also rotates the separator, the values of $V_A$ and $V_V$ are linked in the embodiment described.

It is found, in practice, that it is not normally possible to incline the vanes at angles near the maximum value of $\beta$ given by the above equation as, at such large angles, lighter particles remain entrained in in the flow passing through the apertures. Relatively large $\beta$ angles are, however, desirable if the air flow is not to be restricted to too great an extent: a large overall through-flow is important if the suction cleaner is to be efficient at collecting dust from surfaces, in use, and, for this reason, the apertures and vanes of the separator plate should offer no substantially greater restriction to the air flow than that offered by the smallest aperture between the suction cleaner hose (not shown) and the impeller, in this case the opening 5.

The area available for the air flow through the separator 7 is given by the sum of the minimum areas ($A_{min}$) between the vanes and the leading edges of the apertures. As is seen from Figure 7, $A_{min}$ can be calculated as follows:

$$A_{min} = A \text{ sine } \beta$$

where A is the area of each aperture in the plane of the separator plate.

In the embodiment described above having 20 apertures each approximately 1 cm² in area, with a value of $\beta$ of 35°, the total area for the air flow is approximately $11\frac{1}{2}$ cm² which is slightly larger than the area of the opening 5.

The motor/impeller assembly employed creates a volume through-flow of air through the assembly of 1.8 m³/min, rotating at a speed of approximately 14,000 r.p.m., giving theoretical values of $V_A$ of approximately 23 m/sec, of $V_V$ of approximately 80 m/sec, and of $\rho$ of approximatley 17°. With this apparatus a value of $\beta$ of 35° is found experimentally to be the optimum but vanes between about 30° and 40° give good results.

In practice it is found that, after operation and dismantling of the apparatus described above, each vane of the separator disc has a line of dust particles parallel to its edge, and in a position substantially corresponding to that calculable from Figure 7 for particles following the line given by the relative velocity, x, with $\beta = 35°$, $\rho = 17°$ and an aperture width of 7 mm. The line is, in fact, slightly broadened and slightly closer to the free edge of the vane than the point of impact predicted by the above simplified theory since the particles are deflected from a straight line path to the vanes by entrainment in the air flow which follows a curved path through the apertures. The degree of deflection can be estimated by considering the relative masses of the particles and the air molecules but the above simple theory provides a useful model for calculating the correct operating parameters, i.e. number, size and location of the disc apertures 19 and inclination $\beta$ of the vanes, of a rotary separator for use in a given fluid flow produced by a particular impeller assembly or pump which may differ from that described.

It is found that the apparatus described is extremely efficient and can, in fact, separate talc, which includes particles with sizes down to 1 micron diameter, from the air flow. Thus the separation achieved with the improved apparatus of the invention is far superior to that achievable with the apparatus of EP—A—4145 which gives good separation of particles down to a size of the order of 10 microns but poor separation of particles with sizes below 5 microns. The improved separating efficiency of the present apparatus is deemed to be largely due to the more streamlined air-flow through the apparatus provided by the configuration of the modified housing 7 and stator assembly 11.

The achievement of a streamlined flow also means that the volume-through flow produced by the impeller assembly is not reduced drastically below that achievable without the rotary separator assembly, or that achievable with the type of filter normally used in vacuum cleaners. It will also be appreciated that the flow through a filter falls off with time as the filter becomes clogged, whereas the flow through the present apparatus remains substantially constant until the container 3 is nearly full, and the filters used in such apparatus cannot, in any case, separate particles as fine as talc.

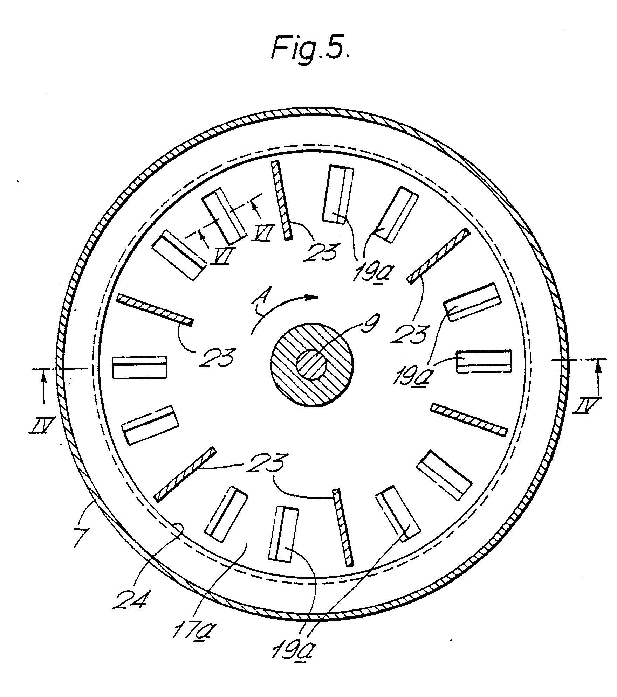

Referring to Figures 4 to 6 of the drawings, a further embodiment of a suction cleaner and a separator assembly are shown in which parts similar to those of Figures 1 to 3 are referenced by the same numerals and will not be described in detail. In the embodiment of Figures 4 to 6, the vaned, apertured rotary separator disc 17 of the first embodiment is replaced by a thicker, slotted disc 17a, without the vanes 20 but with inclined separating surfaces 22 formed in the thickness of the disc itself: the disc is approximately 3 mm thick. There are 12 generally rectangular slots 19a, the angle $\beta$ of the surfaces 22 being the same as in the embodiment of Figures 1 to 3.

The slotted disc 17a can be used in the apparatus of Figures 1 to 3 in place of the vaned disc 17, with similar success, but an alternative arrangement of the housing 7 and baffles is shown in Figures 4 to 6. In this embodiment, impeller blades 23 are provided between the separator disc 17a and a rotary baffle plate 13, and the lower wall of the housing around the disc 17a is thicker than the upper wall attached to the casing 2. An annular flange 24 projects inwardly from the upper edge of the thickened wall portion and defines an inlet opening to the housing; the separator disc 17a is located below the opening while the baffle plate 13 is situated above the opening. A small axial clearance 26 separates the disc 17a from the flange 24. This may be sealed by, for example, a brush seal, or the configuration of the housing, plate 13 and disc 17a may be such that cleansed air is blown out through this clearance, in use, as in the previous embodiment.

The impeller blades 23 are flat, lie in radial planes parallel to the axis of the rotor and are attached at respective upper and lower edges to the plate 8 and to the disc 17a, are equiangularly spaced around the plate 13 and are each located between two adjacent slots 19a.

The blades 23 serve to promote the centrifugal air flow between the disc 17a and the plate 13, in use, and act in the same sense as the impellers of the motor/impeller assembly, thus assisting the air flow through the suction cleaner in general. It may be noted that the blades 23 terminate at their radially inner ends adjacent the inner ends of the slots 19a since, unlike common centrifugal impellers which draw air from their centres, the impeller constituted by the blades 23 receives air through the annulus of slots 19a.

The slotted disc 17a operates in a similar manner to the vaned disc 17 of Figures 1 to 3, the calculations relative to the total flow-cross sectional area ($\xi A_{min}$) of the apertures and the values of $V_A$, $V_V$ the angle $\rho$ and the value of $\beta_{max}$ indicated above being equally applicable. In this case, however, the thickness $d$ (see Figure 6) of the disc for given values of the width $w$ of the apertures 19a and the angle $\beta$ of the inclined surfaces 22 is important.

The minimum thickness $d_{min}$ of the disc can be calculated by simple trigonometry from Figure 6 which shows the path of a particle travelling at relative velocity x, as defined above, towards the disc 17a, grazing the inlet edge of an aperture 19a, just hitting the surface 22 at the extreme opposite edge of the aperture and rebounding in the direction indicated by r. Clearly, were the disc thinner than $d_{min}$ the particle would pass through the aperture with the air flow.

From Figure 6, $d_{min}$ can be shown to be given by:

$$d_{min} = \frac{w \tan \beta . \tan \rho}{\tan \beta + \tan \rho}$$

The minimum distance of the free edge of a vane 20 from the disc 17 of Figures 1 to 3 can also be calculated from this formula. The angle at which a particle rebounds from a surface 22 can also be calculated from consideration of Figure 6.

## Claims

1. A fluid/particle separator unit for particle-containing fluid, comprising a body (7) providing a passage for flow of said fluid having at one end a fluid inlet and at its opposite end a fluid outlet (5), an apertured rotor (8) having its periphery closely adjacent the passage wall mounted for rotation about an axis of the passage by a drive (9) wherein the fluid flow path through each rotor aperture (19, 19a) is bounded partly by a surface (22) of the rotor inclined at an actute angle ($\beta$) to the rotational plane of the rotor, facing in the circumferential direction of motion (A) of the rotor when rotated by the drive and facing upstream with respect to the flow direction in the passage, such that, in use of the unit, particles in the flow rebound from the rotor surfaces and fluid containing a substantially-reduced concentration of particles passes through the apertures and passes therefrom to the outlet, a baffle (13) coaxial with the rotor being arranged in the passage axially downstream of the rotor (8) and upstream of the outlet (5), characterized in that the baffle has its outer peripheral edge at least as far radially from the axis of rotation of the rotor as the radially inner ends of the apertures (19, 19a) and extends inwardly from said outer peripheral edge.

2. A fluid/particle separator unit according to claim 1, wherein stator vanes (14) are located between the baffle (13) and an end wall of the passage opposite the baffle around the outlet (5), so as to form radial ducts (15) for ducting fluid passing from the rotor to the outlet.

3. A fluid/particle separator unit according to claim 1 or claim 2, wherein the baffle (13) is a circular plate parallel to the plane of rotation of the rotor.

4. A fluid/particle separator unit according to claim 1 or claim 2, wherein the baffle is an annular plate parallel to the plane of rotation of the rotor.

5. A fluid/particle separator according to any one of claims 1 to 3 wherein the baffle (13) is mounted for rotation with the rotor.

6. A fluid/particle separator according to claim 5 wherein the baffle (13) is closed at the axis of rotation.

7. A fluid/particle separator unit according to any one of claims 1 to 6, wherein the rotor comprises an apertured disc (17) and the inclined surfaces comprise surfaces of vanes (20) adjacent the apertures (19) and projecting from the disc on the side thereof towards the baffle (13).

8. A fluid/particle separator unit according to any one of claims 1 to 6 wherein the rotor comprises an apertured disc (17a) and the inclined surfaces are faces (22) bounding the apertures (19a) on the trailing side thereof in the direction of rotation and formed within the thickness of the disc.

9. A fluid/particle separator unit according to claim 8 wherein the apertures (19a) are open at the outer periphery of the rotor.

10. A fluid/particle separator assembly having an impeller mounted on a drive shaft for rotation by a motor and housed in a casing (2, 7) having an axial inlet to the impeller, there being a separator unit according to any one of claims 1 to 9 mounted with its rotor on said drive shaft and driven thereby and its outlet forming said inlet to the impeller.

## Patentansprüche

1. Fluidum-Teilchen Trennvorrichtung für ein Teilchen enthaltendes Fluidum, bestehend aus einem Körper (7), der einen Strömungskanal für das Fluidum bildet und an einem Ende einen Einlaß für das Fluidum und an seinem gegenüberliegenden Ende einen Auslaß (5) für das Fluidum aufweist, einem mit Öffnungen versehenen Rotor (8), dessen Umfang der Wand des Strömungskanals eng benachbart ist und der um eine Achse des Strömungskanals durch einen Antrieb (9) drehbar gelagert ist, wobei die Strömung des Fluidums durch jede Rotoröffnung (19, 19a) teilweise durch eine Oberfläche (22) des Rotors begrenzt ist, die unter einem spitzen Winkel β zur Drehebene des Rotors geneigt ist, wobei sie in die Bewegungsrichtung (A) a des durch den Antrieb verdrehten Rotors weist und gegen die Strömungsrichtung in den Kanal gekehrt ist, so daß beim Gebrauch der Vorrichtung in dem Fluidum enthaltene Teilchen von den Rotorflächen zurückprallen und ein Fluidum, das eine wesentlich verringerte Teilchenkonzentration aufweist, durch die Öffnungen hindurchströmt und von diesen zum Auslaß strömt, wobei eine zu dem Rotor koaxiale Prallplatte (13) in dem Strömungskanal axial stromabwärts vom Rotor (8) und stromaufwärts von dem Auslaß (5) angeordnet ist, dadurch gekennzeichnet, daß der äußere Umfangsrand der Prallplatte von der Drehachse des Rotors einen radialen Abstand aufweist, der mindestens so groß ist wie derjenige der radial inneren Enden der Öffnungen (19, 19a) und daß sich die Prallplatte innerhalb des äußeren Umfangsrandes erstreckt.

2. Fluidum-Teilchen Trennvorrichtung nach Anspruch 1, wobei Statorschaufeln (14) zwischen der Prallplatte (13) und einer dieser gegenüberliegenden und den Auslaß (5) umgebenden Endwand des Strömungskanals angeordnet sind, um radiale Kanäle (15) zu bilden, die das aus dem Rotor ausströmende Fluidum dem Auslaß zuführen.

3. Fluidum-Teilchen Trennvorrichtung nach Anspruch 1 oder 2, wobei die Prallplatte (13) eine zur Drehebene des Rotors parallele Kreisscheibe ist.

4. Fluidum-Teilchen Trennvorrichtung nach Anspruch 1 oder 2, wobei die Prallplatte eine zur Drehebene des Rotors parallele Ringplatte ist.

5. Fluidum-Teilchen Trennvorrichtung nach einem der Ansprüche 1 bis 3, wobei die Prallplatte (13) mit dem Rotor drehfest verbunden ist.

6. Fluidum-Teilchen Trennvorrichtung nach Anspruch 5, wobei die Prallplatte (13) an der Drehachse geschlossen ist.

7. Fluidum-Teilchen Trennvorrichtung nach einem der Ansprüche 1 bis 6, wobei der Rotor aus einer mit Öffnungen versehenen Scheibe (17) besteht und wobei die geneigten Oberflächen aus den Oberflächen von Schaufeln (20) bestehen, die den Öffnungen (19) benachbart sind und von der Seite des Scheibe zur Prallplatte (13) hin abstehen.

8. Fluidum-Teilchen Trennvorrichtung nach einem der Ansprüche 1 bis 6, wobei der Rotor aus einer mit Öffnungen versehenen Scheibe (17a) besteht, und wobei die geneigten Oberflächen Flächen (22) sind, welche die Öffnungen (19a) an ihrer in Drehrichtung hinteren Seite begrenzen und in der Dicke der Scheibe ausgebildet sind.

9. Fluidum-Teilchen Trennvorrichtung nach Anspruch 8, wobei die Öffnungen (19a) am Außenumfang des Rotors offen sind.

10. Fluidum-Teilchen Trennbaugruppe mit einem Schaufelrad, das auf einer Antriebswelle zur Verdrehung durch einen Motor gelagert und in einem Gehäuse (2, 7) untergebracht ist, das einen axialen Einlaß zu dem Schaufelrad aufweist, wobei eine Trennvorrichtung nach einem der Ansprüche 1 bis 9 mit ihrem Rotor auf der Antriebswelle gelagert und durch diese antreibbar ist und deren Auslaß den Einlaß des Schaufelrades bildet.

**Revendications**

1. Unité de séparation fluide-particules pour un fluide contenant des particules, comprenant un corps (7) formant un passage pour l'écoulement dudit fluide ayant à une extrémité une entrée du fluide et à son extrémité opposée une sortie du fluide (5), un retor (8) à ouvertures ayant son pourtour très adjacent à la paroi du passage monté pour une rotation autour d'un axe du passage par un entraînement (9), où le trajet d'écoulement du fluide à travers chaque ouverture (19, 19a) du rotor est délimité partiellement par une surface (22) du rotor inclinée un angle aigu (β) relativement au plan de rotation du rotor, faisant face dans la direction circonférentielle de mouvement (A) du rotor lors de sa rotation par l'entraînement et tournée vers le haut relativement à la direction d'écoulement dans le passage de manière que, pendant l'utilisation de l'unité, les particules dans l'écoulement rebondissent des surfaces du rotor et qu'un fluide contenant une concentration sensiblement réduite en particules traverse les ouvertures et passe de là vers la sortie, une chicane (13) coaxiale avec le rotor étant agencée dans le passage axialement en aval du rotor (8) et en amont de la sortie (5), caractérisée en ce que le chicane a son bord périphérique externe au moins aussi loin, radialement, de l'axe de rotation du rotor que les extrémités radialement internes des ouvertures (19, 19a) et s'étend vers l'intérieur dudit bord périphérique externe.

2. Unité de séparation fluide-particules selon la revendication 1 où des pales (14) de stator sont placées entre la chicane (13) et une paroi extrême du passage opposée à la chicane autour de la sortie (5), afin de former des gaines radiales (15) pour diriger le fluide passant du rotor à la sortie.

3. Unité de séparation fluide-particules selon la revendication 1 ou la revendication 2 où la chicane (13) est une plaque circulaire parallèle au plan de rotation du rotor.

4. Unité de séparation fluide-particules selon la revendication 1 ou la revendication 2 où la chicane est une plaque annulaire parallèle au plan de rotation du rotor.

5. Séparateur fluide-particules selon l'une des revendications 1 à 3 où la chicane (13) est montée pour une rotation avec le rotor.

6. Séparateur fluide-particules selon la revendication 5 où la chicane (13) est fermée sur l'axe de rotation.

7. Unité de séparation fluide-particules selon l'une des revendication 1 à 6 où le rotor comprend un disque à ouvertures (17) et les surfaces inclinées forment des surfaces de pales (20) à proximité des ouvertures (19) et faisant saillie du disque sur son côté vers la chicane (13).

8. Unité de séparation fluide-particules selon l'une quelconque des revendications 1 à 6 où le rotor comprend un disque à ouvertures (17a) et les surfaces inclinées sont des faces (22) délimitant les ouvertures (19a) sur son côté arrière, dans la direction de rotation et ayant l'épaisseur du disque.

9. Unité de séparation fluide-particules selon la revendication 8 où les ouvertures (19a) sont ouvertes sur le pourtour externe du rotor.

10. Ensemble séparateur fluide — particules ayant une roue motrice montée sur un arbre d'entraînement pour une rotation par un moteur et abritée dans un boiîtier (2, 7) ayant un entrée axiale vers la roue motrice, une unité de séparation selon l'une quelconque des revendications 1 à 9 étant montée avec son rotor sur ledit arbre d'entraînement et ainsi entraînée et sa sortie formant ladite entrée vers la roue motrice.

# Fig.1.

Fig.2.

Fig.3.

Fig.4.

0 053 508

# Fig.5.

# Fig.6.

# Fig.7.